# EUROPÄISCHE PATENTSCHRIFT

(11) **EP 3 097 060 B1**
(45) Veröffentlichungstag und Bekanntmachung des Hinweises auf die Patenterteilung: **17.06.2020**
(21) Anmeldenummer: 15700861.6
(22) Anmeldetag: 19.01.2015
(51) Int. Cl.: C03C 10/00, C03C 4/18, H01M 10/0562, H01M 4/13

(54) **IONENLEITENDE GLASKERAMIK MIT GRANATARTIGER KRISTALLSTRUKTUR**
ION-CONDUCTING GLASS CERAMIC HAVING GARNET-LIKE CRYSTAL STRUCTURE
VITROCÉRAMIQUE À CONDUCTION IONIQUE AYANT UN STRUCTURE CRISTALLINE DE TYPE GRENAT

(30) Priorität: 22.01.2014 DE 102014100684
(43) Veröffentlichungstag der Anmeldung: 30.11.2016
(73) Patentinhaber: Schott AG, 55122 Mainz (DE)
(72) Erfinder: SCHNEIDER, Meike, 65232 Taunusstein (DE); HOCHREIN, Oliver, 55130 Mainz (DE); SCHMIDBAUER, Wolfgang, 55126 Mainz (DE); KUNZE, Miriam, 31535 Neustadt am Rübenberge (DE)
(74) Vertreter: Witte, Weller & Partner Patentanwälte mbB
(86) Internationale Anmeldenummer: PCT/EP2015/050889
(87) Internationale Veröffentlichungsnummer: WO 2015/110385

(56) Entgegenhaltungen:
- WO-A1-2013/012391
- DE-A1-102007 030 604
- US-A1- 2012 196 189
- US-B1- 6 485 622

## Beschreibung

Die Erfindung betrifft einen Elektrolyten oder einen Elektrolytzusatzstoff, der insbesondere in Lithiumionenbatterien oder anderen Batteriegenerationen, wie etwa Lithium-Luft-Batterien oder Lithium-Schwefelbatterien einsetzbar ist.

Lithium-Ionenbatterien und zukünftige Batteriegenerationen, wie etwa Lithium-Luftbatterien oder Lithium-Schwefelbatterien, müssen neben einer möglichst hohen Energiedichte auch hohe Ansprüche an Sicherheit und Zuverlässigkeit erfüllen, die über die gesamte Lebensdauer gewährleistet sein müssen. In diesem Zusammenhang sind flüssige Elektrolyten in der Vergangenheit häufig negativ hervorgetreten, da sie zu Zersetzungserscheinungen neigen, die zu einem Verlust an Leitfähigkeit und/oder zu unerwünschten Abbauprodukten führen können und leicht entzündlich sind.

Eine Alternative sind Polymerelektrolyte, die jedoch nur geringe ionische Leitfähigkeiten besitzen. Dagegen weisen Gelelektrolyte, die eine Kombination aus Flüssig- und Polymerelektrolyt darstellen, zwar häufig bessere Leitfähigkeiten auf, neigen jedoch zur Brennbarkeit.

Aus diesem Grund wird seit längerer Zeit versucht, Festkörperelektrolyte als Alternative zu entwickeln. Bei Festkörperelektrolyten wird eine lonenleitfähigkeit von mindestens 10⁻⁵ S/cm, besser noch mindestens 10⁻⁴ S/cm gefordert. Gleichzeitig sollte die elektronische Leitfähigkeit mindestens 4 bis 5 Größenordnungen darunterliegen, um eine Selbstentladung der Batterie zu vermeiden. Ferner wird eine chemische Beständigkeit gegenüber allen in der Batterie verwendeten Materialien erwartet, insbesondere gegen metallisches Lithium. Selbstverständlich sollte auch eine ausreichende elektrochemische Stabilität beim Laden und Entladen (Zykeln) der Batterie gegeben sein.

Solche Anforderungen werden nur von wenigen bekannten Materialien erfüllt. Hierzu gehören zum einen sulfidische Systeme mit den Hauptbestandteilen Lithium, Phosphor und Schwefel, zum anderen oxydische Systeme mit NaSiCon oder granatartigen Kristallphasen.

Sulfidische Zusammensetzungen wie Li-S-P, Li₂S-B₂S₃-LI₄SiO₄ oder Li₂S-P₂S₅-P₂O₅Li-S-P und Li₂S-P₂S₅-P₂O₅ werden häufig durch Vermahlen der Ausgangsstoffe unter Schutzgas und anschließende Temperaturbehandlung (ebenfalls in der Regel unter Schutzgas) hergestellt (vergleiche hierzu US 2005/0107239 A1, US 2009/0159839 A1). Teilweise werden Ionenleitfähigkeiten von mehr als 10⁻³ S/cm bei Raumtemperatur angegeben.

Allerdings ist die großtechnologische Herstellung derartiger Materialien aufwendig, da sie unter Luftabschluss erfolgen muss, denn die Materialien sind nicht stabil an Luft. Besonders in Anwesenheit von selbst geringen Mengen an Wasser wird eine schnelle Zersetzung beobachtet. Dies erhöht die Herstellungs- und Verarbeitungskosten und stellt ein sicherheitstechnisches Problem dar.

Auch bei den oxidischen Systemen mit NaSiCon können Leitfähigkeiten von mehr als 10⁻⁴ S/cm bei Raumtemperatur erreicht werden.

Allerdings sind die NaSiCon-Materialien in der Regel nicht stabil gegen metallisches Lithium, was den Einsatz einer zusätzlichen Schutzschicht zum Schutz der Anode erfordert (vergleiche EP 1673818 B1). Weiterhin ist für hohe Leitfähigkeiten häufig der Einsatz von teuren Rohstoffen, wie etwa Germanium, Tantal oder Gallium erforderlich.

Eine Alternative stellen Systeme mit granatartigen Kristallphasen wie etwa Li₇La₃Zr₂O₁₂ (US 2010/0047696 A1) dar. Aus der DE 10 2007 030604 A1 und der WO 2005/085138 A1 sind granatartige Kristallphasen (Li₇₊ₓAₓG₃₋ₓZr₂O₁₂ (mit A: zweiwertiges Kation, G: dreiwertiges Kation) oder Li₅₊ₓAₓG₃₋ₓM₂O₁₂ (mit A: zweiwertiges Kation, G: dreiwertiges Kation, M: fünfwertiges Kation) bekannt. Im reinen System Li₇La₃Zr₂O₁₂ findet bei ca. 150 bis 200°C ein reversibler Phasenübergang von der bei Raumtemperatur stabilen tetragonalen Granatphase zu der kubischen Granatphase statt. Die tetragonale Granatphase verfügt über eine Lithium-Ionenleitfähigkeit von etwa 1,6 x 10⁻⁶ S/cm (vergleiche J. Akawa et al., Journal of Solid State Chemistry 182 (2009), 2046-2052). Die kubische Phase, die sich mit Hilfe von Dotierungen wie Aluminium oder Tantal auch bei Raumtemperatur stabilisieren lässt, weist sogar eine Leitfähigkeit in der Größenordnung von 10⁻⁴ S/cm auf (vergleiche EP 2 159 867 A1).

Materialien mit Lithium-granatartigen Kristallphasen werden in der Regel über ein Festkörpersinterverfahren hergestellt, das häufig mehrmaliges Aufmahlen und verschiedene Temperaturbehandlungen verlangt (vergleiche EP 2 159 867 A1).

Ein Problem bei dieser Herstellung sind die zur Bildung der gewünschten Kristallphasen notwendigen hohen Temperaturen bis zu etwa 1250°C, die gleichzeitig zu einer starken Lithium-Verdampfung führen. Der Einsatz von einem zu hohen Lithiumanteil führt zu Stabilisierung der schlechter leitfähigen tetragonalen Phase, während ein zu geringer Lithiumanteil zur Bildung von Fremdphasen führt. Dies erschwert die Herstellung von phasenreinem, hochleitfähigem Material im industriellen Maßstab.

Aus der DE 10 2012 207 424 B3 ist eine ionenleitfähige, alkaliionenhaltige Glaskeramik bekannt, bei der nach dem Keramisieren der Glaskeramik aus einem Ausgangsglas wenigstens ein Teil der Alkaliionen der Glaskeramik durch Alkaliionen einer anderen, vorzugsweise kleineren, Ordnungszahl ausgetauscht sind. Die Glaskeramik enthält als Hauptkristallphasen Nephelin oder Carnegeit und enthält vor dem Alkali-Ionenaustausch wenigstens folgende Zusammensetzungskomponenten: 15-75 Gew.-% SiO₂, 4-60 Gew.-% Al₂O₃, 4-65 Gew.-% Na₂O, 0-10 Gew.-% Li₂O, 0-10 Gew.-% TiO₂, 0-10 Gew.-% ZrO₂, 0-5 Gew.-% SnO₂, 0-20 Gew.-% B₂O₃, 0-30 Gew.-% P₂O₅. Die Glaskeramiken werden durch Aufschmelzen der Ausgangsmaterialien bei 1600 bis 1650°C in einem Platinum-Rhodium-Tiegel erschmolzen, geläutert und gerührt, dann gegossen und dann kontrolliert gemäß einem Keramisierungsprogramm in eine Glaskeramik überführt. Die Glaskeramik enthält überwiegend Nephelin (NaAlSiO₄) und als Nebenphase je nach Zusammensetzung Na₂TiSiO₅, Li₂SiO₃, Li₂TiO₃. In einem LiNO₃-Bad (6 Stunden bei 340°C wird das Natrium praktisch vollständig durch Lithium ausgetauscht. Die Lithiumionenleitfähigkeit liegt im Bereich von etwa 10⁻⁴ S/cm. Kernbestandteil einer solchen Glaskeramik sollen Kristallphasen aus einem oder mehreren Kristalltypen sein, in denen sich Alkaliionen auf perkolierenden Pfaden, zum Teil regelrechten Kanalstrukturen, in einem weitgehend von festen Bindungen mit überwiegend kovalentem Charakter aufgespannten Netzwerk relativ frei bewegen können. Es wird darauf hingewiesen, dass sich derartige Netzwerke insbesondere unter Verwendung mehrwertiger, speziell drei- bis fünfwertiger Kationen mit verbindenden Sauerstoffatomen aufbauen lassen. Derartige Kristalltypen sollen sich in vielen Kristallsystemen, wie dem Perowskit-artigen Lithium-Lanthan-Titanat La_{(2/3-x)}Li₃xTiO₃, Natriumbeta-Aluminat NaAl₁₁O₁₇, Boraten, Phosphaten, Ketten-, Band-, Schicht- und Gerüstsilikaten finden. In diesem Zusammenhang wird auch das granatartige Li₅La₃(Nb, Ta)₂O₁₂ erwähnt (vgl. Philippe Knauth: Inorganic solid Li ion conductors: An overview, Solid State lonics 180 (2009) 911-916). Zur Herstellung wird allerdings in diesem Zusammenhang nichts offenbart.

Aus der WO 2013/012391 A1 ist eine Redox-Fluss-Batterie bekannt, die eine Lithiumionen leitende Glaskeramik mit granatartiger Hauptkristallphase gemäß dem Oberbegriff von Anspruch 1 enthält.

Aus der US 2012/0196189 A1 ist ein amorpher Lithium-Ionenleiter bekannt, der mittels eines Sol-Gel-Verfahrens hergestellt wird und die Summenformel MwM'xM"yM"'z aufweist,
wobei M wenigstens ein Alkalimetall umfasst,
wobei M' wenigstens ein Element umfasst, das aus der aus Barium, Strontium, Kalzium, Indium, Magnesium, Yttrium, Scandium, Chrom, Aluminium, Alkalimetallen und Lanthaniden bestehenden Gruppe ausgewählt ist,
wobei M"wenigstens ein Element umfasst, das aus der aus Zirkon, Tantal, Niob, Antimon, Zinn, Hafnium, Bismuth, Wolfram, Silizium, Selen, Gallium, und Germanium bestehenden Gruppe ausgewählt ist,
wobei M'" Sauerstoff umfasst und optional wenigstens ein Element umfasst, das aus der aus Schwefel, Selen, und Halogeniden ausgewählt ist,
und wobei w, x, y und z positive Zahlen sind, die beliebige Kombinationen von ganzen Zahlen, Brüchen oder Dezimalen einschließen.

Die US 6 485 622 B1 offenbart eine Lithiumionen leitende Glaskeramik mit der folgenden Zusammensetzung (in Mol-%): 30-45 % P₂O₃, 0-15 % SiO₂, 25-50 % GeO₂+TiO₂, wobei GeO₂ und TiO₂ jeweils 0-50 % betragen, ferner 0-8 % ZrO₂, M₂O₃ größer als null und kleiner gleich 10 ist, wobei M mindestens ein Element ist, das aus der aus In, Fe, Cr, Sc, Y, La, Ce, Pr, Nd, Sm, Eu, Gd, Th, Dy, Ho, Er, Tm, Yb und Lu bestehenden Gruppe ausgewählt ist, ferner 0-12 % Al₂O₃, 0-12 % Ga₂O₃, 10-25 % Li₂O aufweist, und die Li₁₊ₓ(M, Al, Ga)ₓ(Ge_{1-y}Ti_{y})₂₋ₓ(PO₄)₃ als Hauptkristallphase aufweist, wobei 0<x≤0,8, and 0≤y≤1,0 ist. Diese Glaskeramik wird mittels herkömmlicher Sinterverfahren hergestellt.

Vor diesem Hintergrund liegt der Erfindung die Aufgabe zugrunde, ein Material zu offenbaren, das als Festkörper-Elektrolyt oder als Elektrolytzusatzstoff in einer Lithiumionenbatterie, einer All-Solid-State-Batterie, einer Lithium-Luftbatterie oder einer Lithium-Schwefel-Batterie geeignet ist. Dabei soll eine Herstellung auch im technologischen Maßstab auf möglichst einfache und kostengünstige Weise ermöglicht sein.

Diese Aufgabe wird erfindungsgemäß durch einen Lithiumionen leitende Glaskeramik gemäß Anspruch 1 gelöst. Die Aufgabe der Erfindung wird auf diese Weise vollkommen gelöst.

Unter einer Glaskeramik im Sinne der vorliegenden Erfindung wird ein Material verstanden, das schmelztechnologisch hergestellt ist und nachfolgend durch eine gezielte Temperaturbehandlung in eine Glaskeramik überführt wurde.

Die erfindungsgemäße Glaskeramik enthält einen amorphen Anteil von mindestens 5 Gew.-%. Durch den amorphen Anteil wird die Leitfähigkeit positiv beeinflusst. Allerdings sollte der Anteil der amorphen Phase nicht größer als 40 Gew.-%, bevorzugt kleiner gleich 30 Gew.-% sein, da sonst die Gesamtleitfähigkeit verringert wird.

Ein weiterer Vorteil der Herstellung als Glaskeramik liegt in der Möglichkeit, das Gefüge durch eine gesteuerte Kristallisation direkt zu beeinflussen, wodurch die Leitfähigkeit weiter positiv beeinflusst werden kann.

Die erfindungsgemäße Glaskeramik weist vorzugsweise eine Ionenleitfähigkeit von mindestens 5 • 10⁻⁵ S/cm, bevorzugt mindestens 1 • 10⁻⁴ S/cm auf. Teilweise kann die lonenleitfähigkeit sogar noch deutlich höher liegen.

Die Glaskeramik enthält beispielsweise bevorzugt die Oxide von Lithium, Lanthan und Zirkon, sowie weitere Dotierstoffe, die die Stabilisierung der kubischen Granatphase bei Raumtemperatur ermöglichen, sowie nach Bedarf weitere Eigenschaften, wie die Schmelzbarkeit, die Verarbeitung oder die elektrochemischen Eigenschaften positiv beeinflussen.

Soweit im Rahmen dieser Anmeldung Zusammensetzungen in der Form angegeben sind, dass darin bestimmte Bestandteile enthalten sind oder dass sie bestimmte Bestandteile aufweisen, sind diese immer so zu verstehen, dass beliebige weitere Bestandteile darin enthalten sein können (offene Zusammensetzung).

In einer weiteren Ausführungsform der Erfindung sind die angegebenen Zusammensetzungen jedoch auch so zu verstehen, dass nur die jeweils angegebenen Bestandteile enthalten sind (geschlossene Zusammensetzung), abgesehen von unvermeidbaren Verunreinigungen, die durch die Natur der Glasherstellung bedingt sind. Je nach der Reinheit der verwendeten Rohstoffe sind solche unvermeidbaren Verunreinigungen auf maximal 1 Gew.-%, vorzugsweise auf 0,5 Gew.-%, weiter vorzugsweise auf 0,1 Gew.-%, oder sogar auf 0,05 Gew.-% beschränkt.

Soweit im Rahmen dieser Anmeldung Zusammensetzungen in der Form angegeben sind, dass sie aus bestimmten Bestandteilen bestehen, sind diese Zusammensetzungen immer so zu verstehen, dass darin nur die angegebenen Bestandteile enthalten sind (geschlossene Zusammensetzung), allerdings mit der Maßgabe, dass unvermeidbare Verunreinigungen, die durch die Natur der Glasherstellung bedingt sind, enthalten sein können. Je nach der Reinheit der verwendeten Rohstoffe, sind solche unvermeidbaren Verunreinigungen auf maximal 1 Gew.-%, vorzugsweise auf 0,5 Gew.-%, weiter vorzugsweise auf 0,1 Gew.-%, oder sogar auf 0,05 Gew.-% beschränkt.

Soweit im Rahmen dieser Anmeldung Zusammensetzungen in Ausführungsbeispielen durch Aufzählung bestimmter Bestandteile angegeben sind, sind diese Angaben als geschlossene Zusammensetzungen zu verstehen, allerdings mit der Maßgabe, dass unvermeidbare Verunreinigungen, die durch die Natur der Glasherstellung bedingt sind, enthalten sein können. Je nach der Reinheit der verwendeten Rohstoffe, sind solche unvermeidbaren Verunreinigungen auf maximal 1 Gew.-%, vorzugsweise auf 0,5 Gew.-%, weiter vorzugsweise auf 0,1 Gew.-%, oder sogar auf 0,05 Gew.-% beschränkt.

Die Glaskeramik enthält erfindungsgemäß 10-25 Gew.-% Li₂O, bevorzugt 10-20 Gew.-% Li₂O.

Weiter enthält die Glaskeramik insgesamt 40-60 Gew.-%, bevorzugt 50-60 Gew.-% eines Oxids, mindestens eines Lanthanoiden, vorzugsweise La₂O₃.

Ferner enthält die Glaskeramik 15-35 Gew.-%, vorzugsweise 15-30 Gew.-%, weiter bevorzugt 20-30 Gew.-%, ZrO₂.

Mit diesen Grundstoffen kann die gewünschte Hauptkristallphase auf besonders einfache und kostengünstige Weise realisiert werden.

Durch den Zusatz weiterer Dotierstoffe gemäß der oben angegebenen Summenformel lassen sich ferner gezielt Mischkristallhauptphasen herstellen, wodurch die Leitfähigkeit noch weiter optimiert werden kann.

Die Glaskeramik enthält gemäß einer weiteren Ausführung der Erfindung bevorzugt 0-10 Gew.-%, weiter bevorzugt 0-5 Gew.-%, ferner bevorzugt 1-5 Gew.-% eines Oxids, das aus der Gruppe ausgewählt ist, die aus Al₂O₃, Bi₂O₃, Ga₂O₃, Y₂O₃, Fe₂O₃, Cr₂O₃, In₂O₃ und Mischungen hiervon besteht.

Gemäß einer weiteren Ausführung der Erfindung enthält die Glaskeramik vorzugsweise 0-20 Gew.-%, weiter bevorzugt 1-20 Gew.-%, weiter bevorzugt 0-13 Gew.-%, weiter bevorzugt 1-13 Gew.-%, besonders bevorzugt 5-13 Gew.-% eines Oxids, das aus der Gruppe ausgewählt ist, die aus Ta₂O₃, Nb₂O₅, V₂O₅, P₂O₅ und Mischungen hiervon besteht.

Gemäß einer weiteren Ausgestaltung der Erfindung enthält die Glaskeramik bevorzugt 0-10 Gew.-%, weiter bevorzugt 0-5 Gew.-%, besonders bevorzugt 1-5 Gew.-% eines Oxids, das aus der Gruppe ausgewählt ist, die aus TiO₂, HfO₂, SnO₂ und Mischungen hiervon besteht.

Gemäß einer weiteren Ausgestaltung der Erfindung enthält die Glaskeramik vorzugsweise 0-10 Gew.-%, weiter bevorzugt 1-10 Gew.-%, mindestens eines Oxids, das aus der Gruppe ausgewählt ist, die aus RO, ZnO und Mischungen hiervon besteht, wobei R ein Erdalkali-Ion ist.

Durch diese Zusätze lassen sich die gewünschten Eigenschaften weiter positiv beeinflussen, also insbesondere die Leitfähigkeit erhöhen, die chemische Stabilität gegenüber den in der Batterie verwendeten Materialien positiv beeinflussen und teilweise auch die Herstellbarkeit beim Aufschmelzen erleichtern. Ferner kann eine ausreichende elektrochemische Stabilität beim Zykeln der Batterie positiv beeinflusst werden.

Die erfindungsgemäße Glaskeramik wird vorzugsweise als Elektrolyt oder Elektrolytzusatzstoff in einer Lithium-Ionenbatterie, einer All-Solid-State-Batterie, einer Lithium-Luft-Batterie oder einer Lithium-Schwefel-Batterie eingesetzt.

Gleichermaßen ist der Einsatz der Glaskeramik als Elektrodenzusatz in einer derartigen Batterie denkbar.

Es sind hierbei alle bekannten Integrationsformen denkbar, wie etwa als dünne Schicht oder Membran, als einziger Elektrolyt oder als Bestandteil des Elektrolyten gemeinsamen mit anderem Material. Zur Herstellung einer solchen Schicht oder Membran können neben den Formgebungsmöglichkeiten eines Glases (Gießen, Ziehen, Walzen usw.) Techniken wie Siebdruck, Foliengießen oder Beschichtungstechniken zum Einsatz kommen.

Auch die Verwendung als Beschichtung auf einer Elektrode ist möglich, etwa als Bestandteil eines Kompositelektrolyten, bevorzugt einer Polymer-Feststoffmembran. Die Glaskeramik kann auch als Bestandteil einer Beschichtung verwendet werden, wobei die Glaskeramik vorzugsweise 50 bis 100 Vol.-%, weiter bevorzugt 70 bis 95 Vol.-%, besonders bevorzugt 80 bis 90 Vol.-% der Beschichtung ausmacht.

Eine erfindungsgemäße Glaskeramik lässt sich durch Erschmelzen und Homogenisieren der Ausgangsstoffe und durch eine Abkühlung der Schmelze (vorzugsweise nach einem Gießen), durch direktes Erstarren oder eine gezielte kontrollierte Abkühlung oder aber durch Abschrecken, gefolgt von einer Temperaturbehandlung (Keramisierungsbehandlung) in ein glaskeramisches Material mit granatartiger Hauptkristallphase überführen.

Vorzugsweise erfolgt das Aufschmelzen und Homogenisieren in einem induktiv beheizten Skull-Tiegel.

Da lithiumhaltige Glasschmelzen sehr aggressiv sind, lässt sich ein Erschmelzen in Platin- oder Platin-Rhodium-Tiegel allenfalls im Labormaßstab durchführen. Ein Erschmelzen in einem Platinum-Tiegel führt zu einem Angriff auf das Tiegelmaterial und im hergestellten Produkt zu eindeutig nachweisbaren Mengen des Edelmetalls. Dies führt wiederum zu einem deutlichen Anteil elektronischer Leitfähigkeit, was sich nachteilig auswirkt.

Eine weitere Möglichkeit zur schmelztechnischen Herstellung ist die Verwendung eines Glaskohlenstofftiegels. Da diese Tiegel jedoch bei den erforderlichen hohen Temperaturen in sauerstoffhaltiger Atmosphäre oxidiert werden, muss die Herstellung unter Schutzgasatmosphäre (Stickstoff oder Argon) erfolgen. Diese Herstellungsweise ist daher für kleinere Mengen sinnvoll, für eine großtechnische Produktion jedoch nachteilig, da mit zusätzlichem Kostenaufwand verbunden.

Das Aufschmelzen und Homogenisieren in einem induktiv beheizten Skull-Tiegel ist somit eine bevorzugte Herstellungsart, durch die die vorstehend erwähnten Nachteile vermieden werden.

Zu den Details des Aufschmelzens in einem Skull-Tiegel wird auf die DE 199 39 780 A1 und auf die DE 199 39 782 C1 verwiesen, die hier vollständig durch Bezugnahme eingeschlossen werden.

Vorzugsweise wird hierbei ein Skull-Tiegel verwendet, der aus einer Mehrzahl von Metallrohren besteht, die von Kühlmittel durchflossen sind, mit schlitzartigen Zwischenräumen zwischen den Metallrohren, und mit einer die Metallrohre von außen umschließenden Induktionsspule, wobei die Metallrohre vorzugsweise miteinander kurzgeschlossen sind.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: ein Röntgenbeugungsdiagramm einer schmelztechnolgisch in einem Platintiegel hergestellten Glaskeramik mit tetragonalem LLZO (Li₇La₃Zr₂O₁₂) als Hauptphase und geringen Mengen an elementarem Pt als Nebenphase;
- Fig. 2: eine SEM-Aufnahme des schmelztechnologisch hergestellten LLZO und
- Fig. 3: eine Polarisationsmikroskop-Aufnahme einer erfindungsgemäßen LLZO-Glaskeramik, die in einem Skull-Tiegel erschmolzen wurde, wobei die dunklen Bereiche die amorphe Phase zeigen.

### Beispiele

Die erfindungsgemäße Glaskeramik weist vorzugsweise eine granatartiger Hauptkristallphase mit der Summenformel auf:

Li_{7+x-y} Mₓ^{II} M₃₋ₓ^{III} M_{2-y}^{IV} M_{y}^{V} O₁₂,

wobei M^{II} ein zweiwertiges Kation, M^{III} ein dreiwertiges Kation, M^{IV} ein vierwertiges Kation, M^{V} ein fünfwertiges Kation darstellt, wobei vorzugsweise 0≤ x <3, weiter bevorzugt 0≤ x ≤ 2, 0≤ y <2, und besonders bevorzugt 0≤ y ≤ 1.

Tabelle 1 zeigt verschiedene Zusammensetzungen (in Gew.-% auf Oxidbasis), die zur Herstellung einer erfindungsgemäßen Glaskeramik verwendet wurden, die Angaben zu den Anteilen an kubischer, tetragonaler und amorpher Phase sind in Vol.-%.

**Tab. 1: n.b.= nicht bestimmt**

| Beispiel | 1 | 2 | 3 | 4 | 5 | 6 | 7 | 8 | 9 |
|---|---|---|---|---|---|---|---|---|---|
| Li₂O | 14,02 | 14,16 | 14,31 | 13,87 | 14,32 | 12,86 | 13,23 | 13,94 | 14,65 |
| La₂O₃ | 55,24 | 55,15 | 55,06 | 55,34 | 55,12 | 56,07 | 55,83 | 53,64 | 56,37 |
| ZrO₂ | 27,86 | 27,81 | 27,76 | 27,90 | 24,32 | 24,74 | 24,63 | 20,29 | 21,32 |
| Al₂O₃ | 2,88 | 2,88 | 2,87 | 2,89 | | | | | |
| Ta₂O₅ | | | | | 6,23 | 6,34 | 6,31 | 12,13 | |
| Nb₂O₅ | | | | | | | | | 7,66 |
| Kubische Phase | 62% | 55% | 40% | 38% | 27% | 49% | 75% | 100% | 100% |
| Tetragonale Phase | 38% | 45% | 60% | 62% | 73% | 51% | 25% | | |
| Fremdphasen | keine | keine | keine | keine | keine | keine | keine | keine | keine |
| amorpher Anteil | ca. 15 % | ca. 10 % | 16% | 21% | n.b. | n.b. | n.b. | n.b. | n.b. |
| Leitfähigkeit (S/cm) | 1 • 10⁻⁴ | n.b. | 1 • 10⁻⁴ | n.b. | 3 • 10⁻⁴ | 2,9 • 10⁻⁴ | 3 • 10⁻⁴ | 5 • 10⁻⁴ | 3 • 10⁻⁴ |

Das Erschmelzen erfolgt in einem sogenannten Skull-Tiegel, wie etwa in der DE 199 39 782 C1 beschrieben.

Bei der Skull-Technologie wird ein wassergekühlter Tiegel verwendet, in dem sich während der Schmelze eine kühlere Schutzschicht aus dem zu schmelzenden Material bildet. Demzufolge wird während des Schmelzvorgangs kein Tiegelmaterial aufgelöst. Der Energieeintrag in die Schmelze wird mittels einer Hochfrequenz-Einkopplung über die umgebende Induktionsspule in das schmelzflüssige Material realisiert. Eine Bedingung dabei ist die ausreichende Leitfähigkeit der Schmelze, die im Fall von Lithium-Granat-Schmelzen durch den hohen Lithiumgehalt gegeben ist. Während des Einschmelzvorgangs tritt eine Lithiumverdampfung auf, was leicht durch einen Lithium-überschuss korrigiert werden kann. Dazu wird im Regelfall mit einem 1,1- bis 2-fachen Lithium-Überschuss gearbeitet.

Die Rohstoffe wurden entsprechend der Zusammensetzung gemäß Tabelle 1 gemischt und in den nach oben offenen Skull-Tiegel gefüllt. Das Gemenge musste zunächst vorgeheizt werden, um eine gewisse Mindestleitfähigkeit zu erreichen. Hierzu wurde eine Brennerbeheizung verwendet. Nach Erreichen der Kopplungstemperatur wurde das weitere Aufheizen und Homogenisieren der Schmelze durch Hochfrequenz-Einkopplung über die Induktionsspule erreicht.

Um die Homogenisierung der Schmelzen zu verbessern, wurde mit einem wassergekühlten Rührer gerührt.

Nach vollständiger Homogenisierung wurden Direktproben aus der Schmelze entnommen (schnelle Kühlung), während der Rest der Schmelze durch Abschalten der Hochfrequenz langsam abgekühlt wurde.

Das auf diesem Wege hergestellte Material kann grundsätzlich entweder durch direktes Erstarren aus der Schmelze oder durch Abschrecken, gefolgt von einer Temperaturbehandlung (Keramisierung) in ein glaskeramisches Material mit granatartiger Hauptkristallphase überführt werden.

Die aus der Schmelze direkt entnommenen Proben zeigten unabhängig von der Kühlung eine spontane Kristallisation, so dass auf eine nachgeschaltete Keramisierungsbehandlung verzichtet werden konnte.

Die Messung der lonenleitfähigkeit zeigte einen positiven Einfluss der in der Glaskeramik enthaltenen amorphen Phase, was sich mit einer Reduktion der die Leitfähigkeit vermindernden Korngrenzen erklären lässt.

Aus den so erhaltenen Glaskeramiken wurden Proben für die Impedanzspektroskopie zur Bestimmung der Leitfähigkeit, sowie für Röntgenbeugungsuntersuchungen (XRD) hergestellt. Um eine Degradation der Proben in Wasserkontakt zu vermeiden, wurde die Probenpräparation wasserfrei durchgeführt.

Die Röntgenbeugungsuntersuchungen (XRD) ergaben in allen Proben eine Mischung aus tetragonaler und kubischer Kristallphase.

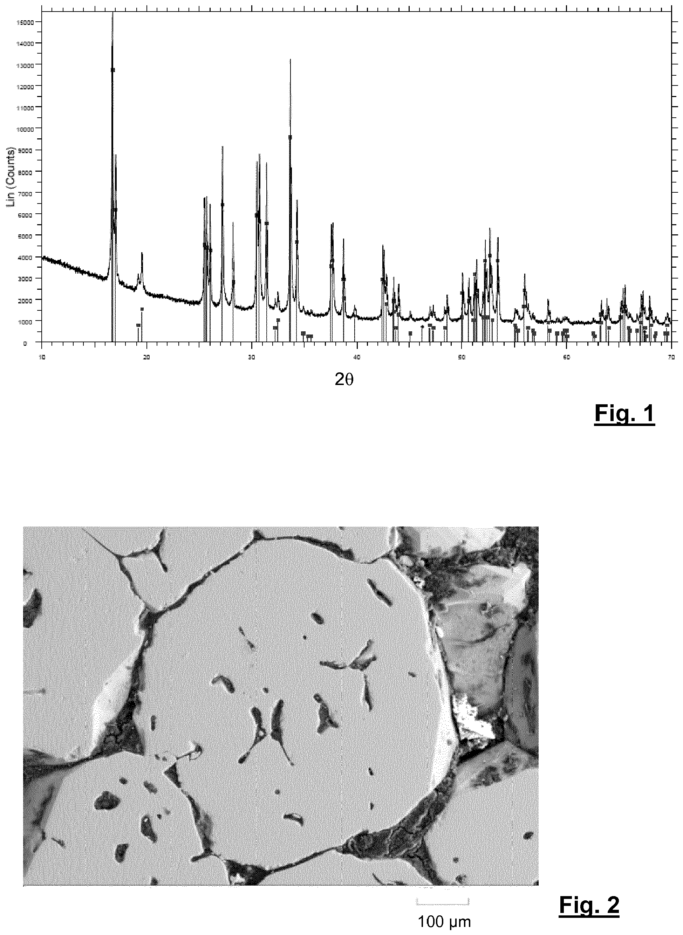

Fig. 1 zeigt zum Vergleich ein in einem Platintiegel schmelztechnologisch hergestelltes, tetragonales LLZO. Hier sind neben der gewünschten Hauptphase (tetragonales LLZO (Li₇La₃Zr₂O₁₂)) als Nebenphase Reflexe von elementarem Platin (Hauptpeak bei 39,8°) zu sehen. Dies rührt von einem Angriff auf den Schmelztiegel durch die stark lithiumhaltige Schmelze her. Aus diesem Grunde erfolgten die späteren Schmelzvorgänge mit den Zusammensetzungen gemäß Tabelle 1 in einen Skull-Tiegel, wie oben beschrieben.

Fig. 2 zeigt das schmelztechnisch im Pt-Tiegel hergestellte LLZO im Rasterelektronenmikroskop mit Strukturen mit einer Größe von bis 300 µm.

Zur genauen Bestimmung des Phasengehaltes wurde eine Rietveld-Analyse durchgeführt. Gemäß Tabelle 1 weisen die Proben, die mit Aluminium dotiert sind (Nr. 1-4) ein Anteil an kubischer Phase zwischen 38 und 62% auf, während die mit Tantal dotierten Proben (Nr. 5-8) einen kubischen Anteil von 27 bis 100% aufweisen (jeweils ohne Berücksichtigung des amorphen Anteils). Auch mit einer Niobdotierung ist eine vollständige Stabilisierung der kubischen Phase möglich (vergleiche Beispiel 9).

Selbst bei den Proben mit hohem tetragonalem Anteil ergeben sich erstaunlich hohe Leitfähigkeiten. So zeigt Beispiel 3, das 60% an tetragonaler Phase enthält, deren Leitfähigkeit in der Literatur mit 1,6 • 10⁻⁶ S/cm angegeben wird, eine Leitfähigkeit von ca. 1 • 10⁻⁴ S/cm. Dies entspricht fast der für Aluminium-Dotierungen erwarteten Leitfähigkeit der reinen kubischen Phase (2 • 10⁻⁴ S/cm).

Eine Bestimmung des amorphen Anteils über Rietveld-Verfeinerungen bzw. über einen externen Standard führte bei den Proben aufgrund der starken Reflex-Überlagerungen der kubischen und tetragonalen LLZO-Phasen nicht zu korrekten Ergebnissen. Die Bestimmung des amorphen Anteils bzw. der Kristallinität wurde daher über den Verlauf des Untergrundes durchgeführt. Auch Messungen an vollständig kristallinen Proben zeigen einen Untergrund, der durch Kristallgitterfehler, Einfluss von Geräteoptiken, Fluoreszenz- und Streueffekten herrührt. Ist die Probe nicht vollständig kristallin, so addiert sich zu diesem Untergrund noch der Beitrag der amorphen Phase. Der konstante Untergrund wurde daher über Standardproben mit definierten amorphen Anteilen bestimmt. Auf diese Weise war die Bestimmung des amorphen Anteils in den Proben möglich, der gemäß Tabelle 1 zwischen 10 und 21% liegt.

Berücksichtigt man die unterschiedlichen Leitfähigkeiten der kubischen und tetragonalen Phase, sowie die Tatsache, dass teilweise erhebliche Mengen an tetragonaler Phase in den Proben enthalten sind, so ergibt sich, dass durch die in der Glaskeramik enthaltene amorphe Phase die Gesamtleitfähigkeit erhöht wird, was ein überraschendes Ergebnis darstellt.

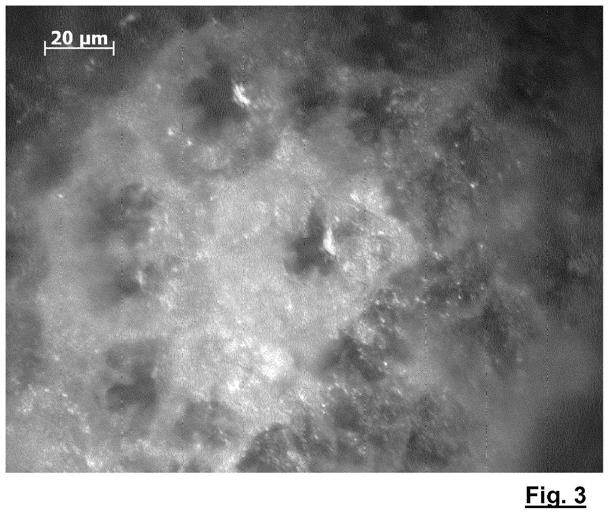

Da die oben beschriebene Bestimmung des amorphen Anteils nur indirekt ist, wurde eine Probe (Zusammensetzung entsprechend Beispiel 5) mit Hilfe eines Polarisationsmikroskops untersucht. Hierbei zeigten sich dunkle Bereiche in der Probe, was einen Hinweis auf einen amorphen Anteil darstellt. Fig. 3 zeigt eine Aufnahme an einer Probe, die, um die Sichtbarkeit der amorphen Bereiche zu erhöhen, 2-3 Tage in Wasser ausgelagert wurde. Man erkennt deutlich etwa 10 µm große amorphe Strukturen.

## Patentansprüche

1. Lithiumionen leitende Glaskeramik mit granatartiger Hauptkristallphase, die einen amorphen Anteil von mindestens 5 % Gew.-%, bevorzugt mindestens 10 % Gew.-%, enthält, **dadurch gekennzeichnet, dass** die granatartige Hauptkristallphase die folgende Summenformel aufweist:
Li_{7+x-y} Mₓ^{II} M₃₋ₓ^{III} M_{2-y}^{IV} M_{y}^{V} O₁₂,
wobei M^{II} ein zweiwertiges Kation, M^{III} ein dreiwertiges Kation, M^{IV} ein vierwertiges Kation, M^{V} ein fünfwertiges Kation darstellt, wobei vorzugsweise 0≤ x <3, weiter bevorzugt 0≤ x ≤ 2, 0≤ y <2, und besonders bevorzugt 0≤ y ≤ 1;
wobei die Glaskeramik 10-25 Gew.-% Li₂O, insgesamt 40-60 Gew.-% eines Oxids mindestens eines Lanthanoiden und 15-35 Gew.-% ZrO₂ enthält.

2. Glaskeramik nach Anspruch 1, bei der der amorphe Anteil maximal 40 Gew.-%, vorzugsweise maximal 30 Gew.-% beträgt.

3. Glaskeramik nach Anspruch 1 oder 2, die eine lonenleitfähigkeit von mindestens 5 • 10⁻⁵ S/cm, bevorzugt mindestens 1 • 10⁻⁴ S/cm aufweist.

4. Glaskeramik nach einem der vorhergehenden Ansprüche, die 10-20 Gew.-% Li₂O enthält.

5. Glaskeramik nach einem der vorhergehenden Ansprüche, die insgesamt 50-60 Gew.-%, eines Oxids mindestens eines Lanthanoiden, vorzugsweise La₂O₃, enthält.

6. Glaskeramik nach einem der vorhergehenden Ansprüche, die 15-30 Gew.-%, bevorzugt 20-30 Gew.-%, ZrO₂ enthält.

7. Glaskeramik nach einem der vorhergehenden Ansprüche, die 0-10 Gew.-%, bevorzugt 0-5 Gew.-%, besonders bevorzugt 1-5 Gew.-%, eines Oxids enthält, das aus der Gruppe ausgewählt ist, die aus Al₂O₃, Bi₂O₃, Ga₂O₃, Y₂O₃, Fe₂O₃, Cr₂O₃, In₂O₃ und Mischungen hiervon besteht.

8. Glaskeramik nach einem der vorhergehenden Ansprüche, die 0-20 Gew.-%, vorzugsweise 1-20 Gew.-%, weiter bevorzugt 0-13 Gew.-%, weiter bevorzugt 1-13 Gew.-%, besonders bevorzugt 5-13 Gew.-%, eines Oxids aufweist, das aus der Gruppe ausgewählt ist, die aus Ta₂O₃, Nb₂O₅, V₂O₅, P₂O₅ und Mischungen hiervon besteht.

9. Glaskeramik nach einem der vorhergehenden Ansprüche, die 0-10 Gew.-%, vorzugsweise 0-5 Gew.-%, besonders bevorzugt 1-5 Gew.-%, eines Oxids aufweist, das aus der Gruppe ausgewählt ist, die aus TiO₂, HfO₂, SnO₂ und Mischungen hiervon besteht.

10. Glaskeramik nach einem der vorhergehenden Ansprüche, die 0-10 Gew.-%, bevorzugt 1-10 Gew.-%, mindestens eines Oxids enthält, das aus der Gruppe ausgewählt ist, die aus RO, ZnO und Mischungen hiervon besteht, wobei R ein Erdalkali-Ion ist.

11. Verwendung der Glaskeramik nach einem der vorhergehenden Ansprüche als Elektrolyt, Elektrolytzusatzstoff oder als Elektrodenzusatz in einer Lithiumionenbatterie, einer All-Solid-State Batterie, einer Lithium-Luft- oder einer Lithium-Schwefel-Batterie.

12. Verwendung der Glaskeramik nach einem der Ansprüche 1-10 als Bestandteil eines Kompositelektrolyten, bevorzugt einer Polymer-Feststoffmembran.

13. Verwendung der Glaskeramik nach einem der Ansprüche 1-10 als Beschichtung oder als Bestandteil einer Beschichtung auf einer Elektrode, wobei die Glaskeramik vorzugsweise 50 bis 100 Vol.-%, weiter bevorzugt 70 bis 95 Vol.-%, besonders bevorzugt 80 bis 90 Vol.-% der Beschichtung ausmacht.

14. Verfahren zum Herstellen einer Glaskeramik nach einem der Ansprüche 1 bis 10, bei dem Ausgangsstoffe für die Glaskeramik erschmolzen und homogenisiert werden und die Glaskeramik durch eine Abkühlung der Schmelze oder eine nachfolgende Temperaturbehandlung erzeugt wird, wobei das Aufschmelzen und Homogenisieren in einem induktiv beheizten Skull-Tiegel erfolgt, wobei vorzugsweise ein Skull-Tiegel verwendet wird, der aus einer Mehrzahl von Metallrohren besteht, die von Kühlmittel durchflossen sind, mit schlitzartigen Zwischenräumen zwischen den Metallrohren, und mit einer die Metallrohre von außen umschließenden Induktionsspule, wobei die Metallrohre vorzugsweise miteinander kurzgeschlossen sind.

15. Verfahren zum Herstellen einer Glaskeramik nach einem der Ansprüche 1 bis 10, bei dem Ausgangsstoffe für die Glaskeramik erschmolzen und homogenisiert werden und die Glaskeramik durch eine Abkühlung der Schmelze oder eine nachfolgende Temperaturbehandlung erzeugt wird, wobei das Aufschmelzen und Homogenisieren in einem Glaskohlenstofftiegel unter Schutzgasatmosphäre erfolgt.

## Claims

1. A lithium-ion conducting glass ceramic comprising a garnet-like main crystal phase having an amorphous proportion of at least 5 % wt.-%, preferably at least 10 % wt.-%, **characterized in that** the garnet-like main crystal phase has the chemical formula:
Li_{7+x-y} Mₓ^{II} M₃₋ₓ^{III} M_{2-y}^{IV} M_{y}^{V} O₁₂,
wherein M^{II} is a bivalent cation, M^{III} a trivalent cation, M^{IV} a tetravalent cation, M^{V} a pentavalent cation, wherein preferably 0≤ x <3, further preferred 0≤ x ≤ 2, 0≤ y <2, and particularly preferred 0≤ y ≤ 1;
wherein the glass ceramic comprises 10-25 wt.-% of Li₂O, in total 40-60 wt.-% of an oxide of at least one lanthanoid, and 15-35 wt.-% of ZrO₂.

2. The glass ceramic of claim 1, wherein the amorphous proportion is a maximum of 40 wt.-%, preferably a maximum of 30 wt.-%.

3. The glass ceramic of claim 1 or 2, having an ion-conductivity of at least 5 • 10⁻⁵ S/cm, preferably of at least 1 • 10⁻⁴ S/cm.

4. The glass ceramic of any of the preceding claims, comprising 10-20 wt.-% of Li₂O.

5. The glass ceramic of any of the preceding claims, comprising in total 50-60 wt.-% of an oxide of at least one lanthanoid, preferably La₂O₃.

6. The glass ceramic of any of the preceding claims, comprising 20-30 wt.-% of ZrO₂.

7. The glass ceramic of any of the preceding claims, comprising preferably 0-10 wt.-%, preferably 0-5 wt.-%, more preferred 1-5 wt.-% of one oxide being selected from the group consisting of Al₂O₃, Bi₂O₃, Ga₂O₃, Y₂O₃, Fe₂O₃, Cr₂O₃, In₂O₃, and mixtures thereof.

8. The glass ceramic of any of the preceding claims, comprising 0-20 wt.-%, preferably 1-20 wt.-%, further preferred 0-13 wt.-%, further preferred 1-13 wt.-%, particularly preferred 5-13 wt.-% of an oxide being selected from the group consisting of Ta₂O₃, Nb₂O₅, V₂O₅, P₂O₃, and mixtures thereof.

9. The glass ceramic of any of the preceding claims, comprising 0-10 wt.-%, preferably 0-5 wt.-%, particularly preferred 1-5 wt.-%, of an oxide being selected from the group consisting of TiO₂, HfO₂, SnO₂, and mixtures thereof.

10. The glass ceramic of any of the preceding claims, comprising 0-10 wt.-%, preferably 1-10 wt.-% of at least of an oxide being selected from the group consisting of RO, ZnO, and mixtures thereof, wherein R is an alkaline earth ion.

11. A use of the glass ceramic of any of the preceding claims as an electrolyte or electrolyte additive within a lithium-ion battery, an all-solid-state battery, a lithium-air or a lithium-sulfur battery.

12. A use of the glass ceramic of any of claims 1-10 as a component of a composite electrolyte, preferably of a polymeric solid-state membrane.

13. A use of the glass ceramic of any of claims 1-10 as a coating or as a component of a coating on an electrode, wherein the glass ceramic preferably comprises 50 to 100 vol.-%, further preferred 70 to 95 vol.-%, particularly preferred 80 to 90 vol.-% of the coating.

14. A method of producing a glass ceramic of any of claims 1 to 10, wherein the starting materials for the glass ceramic are molten and homogenized, and the glass ceramic is generated by cooling the melt by a subsequent temperature treatment, wherein the melting and homogenizing is done within an inductively heated Skull crucible, wherein preferably a Skull crucible is used consisting of a plurality of metal tubes being transversed by a coolant and having slot-like intervals between the metal tubes, and further having an induction coil surrounding the metal tubes from the outside, wherein the metal tubes preferably are shorted with each other.

15. A method of producing a glass ceramic of any of claims 1 to 10, wherein the starting materials for the glass ceramic are molten and homogenized, and the glass ceramic is generated by cooling the melt by a subsequent temperature treatment, wherein wherein the melting and homogenizing is done within a glass-carbon crucible under protective air.

## Revendications

1. Vitrocéramique conduisant les ions lithium ayant une phase cristalline principale de type grenat, qui contient une proportion amorphe d'au moins 5 % en poids, de préférence d'au moins 10 % en poids, **caractérisée en ce que** la phase cristalline principale de type grenat présente la formule globale suivante :
Li_{7+x-y}Mₓ^{II}M₃₋ₓ^{III}M_{2-y}^{IV}M_{y}^{V}O₁₂,
dans laquelle M^{II} représente un cation bivalent, M^{III} un cation trivalent, M^{IV} un cation tétravalent, M^{V} un cation pentavalent, avec de préférence 0 ≤ x < 3, de manière davantage préférée 0 ≤ x ≤ 2, 0 ≤ y < 2, et de manière particulièrement préférée 0 ≤ y ≤ 1 ;
la vitrocéramique contenant 10 à 25 % en poids de Li₂O, au total 40 à 60 % en poids d'un oxyde d'au moins un lanthanide et 15 à 35 % en poids de ZrO₂.

2. Vitrocéramique selon la revendication 1, dans laquelle la proportion amorphe est d'au plus 40 % en poids, de préférence d'au plus 30 % en poids.

3. Vitrocéramique selon la revendication 1 ou 2, qui présente une conductivité ionique d'au moins 5 · 10⁻⁵ S/cm, de préférence d'au moins 1 · 10⁻⁴ S/cm.

4. Vitrocéramique selon l'une quelconque des revendications précédentes, qui contient 10 à 20 % en poids de Li₂O.

5. Vitrocéramique selon l'une quelconque des revendications précédentes, qui contient au total 50 à 60 % en poids d'un oxyde d'au moins un lanthanide, de préférence La₂O₃.

6. Vitrocéramique selon l'une quelconque des revendications précédentes, qui contient 15 à 30 % en poids, de préférence 20 à 30 % en poids, de ZrO₂.

7. Vitrocéramique selon l'une quelconque des revendications précédentes, qui contient 0 à 10 % en poids, de préférence 0 à 5 % en poids, de manière particulièrement préférée 1 à 5 % en poids, d'un oxyde, qui est choisi dans le groupe qui est constitué par Al₂O₃, Bi₂O₃, Ga₂O₃, Y₂O₃, Fe₂O₃, Cr₂O₃, In₂O₃ et leurs mélanges.

8. Vitrocéramique selon l'une quelconque des revendications précédentes, qui contient 0 à 20 % en poids, de préférence 1 à 20 % en poids, de manière davantage préférée 0 à 13 % en poids, de manière davantage préférée 1 à 13 % en poids, de manière particulièrement préférée 5 à 13 % en poids, d'un oxyde, qui est choisi dans le groupe qui est constitué par Ta₂O₃, Nb₂O₅, V₂O₅, P₂O₅ et leurs mélanges.

9. Vitrocéramique selon l'une quelconque des revendications précédentes, qui contient 0 à 10 % en poids, de préférence 0 à 5 % en poids, de manière particulièrement préférée 1 à 5 % en poids, d'un oxyde, qui est choisi dans le groupe qui est constitué par TiO₂, HfO₂, SnO₂ et leurs mélanges.

10. Vitrocéramique selon l'une quelconque des revendications précédentes, qui contient 0 à 10 % en poids, de préférence 1 à 10 % en poids, d'au moins un oxyde, qui est choisi dans le groupe qui est constitué par RO, ZnO et leurs mélanges, R étant un ion alcalino-terreux.

11. Utilisation de la vitrocéramique selon l'une quelconque des revendications précédentes en tant qu'électrolyte, additif d'électrolyte ou ajout d'électrode dans une batterie lithium-ion, une batterie tout solide, une batterie lithium-air ou lithium-soufre.

12. Utilisation de la vitrocéramique selon l'une quelconque des revendications 1 à 10 en tant que constituant d'un électrolyte composite, de préférence d'une membrane solide polymère.

13. Utilisation de la vitrocéramique selon l'une quelconque des revendications 1 à 10 en tant que revêtement ou en tant que constituant d'un revêtement sur une électrode, la vitrocéramique représentant de préférence 50 à 100 % en volume, de manière davantage préférée 70 à 95 % en volume, de manière particulièrement préférée 80 à 90 % en volume du revêtement.

14. Procédé de fabrication d'une vitrocéramique selon l'une quelconque des revendications 1 à 10, selon lequel des matières premières pour la vitrocéramique sont fondues et homogénéisées et la vitrocéramique est formée par un refroidissement de la masse fondue ou un traitement thermique ultérieur, la fusion et l'homogénéisation ayant lieu dans un creuset à croûte refroidie chauffé par induction, un creuset à croûte refroidie qui est constitué par une pluralité de tubes métalliques qui sont traversés par un agent réfrigérant étant utilisé de préférence, comprenant des espaces intermédiaires de type fente entre les tubes métalliques, et comprenant une bobine d'induction entourant les tubes métalliques à l'extérieur, les tubes métalliques étant de préférence court-circuités les uns avec les autres.

15. Procédé de fabrication d'une vitrocéramique selon l'une quelconque des revendications 1 à 10, selon lequel des matières premières pour la vitrocéramique sont fondues et homogénéisées et la vitrocéramique est formée par un refroidissement de la masse fondue ou un traitement thermique ultérieur, la fusion et l'homogénéisation ayant lieu dans un creuset en carbone vitreux sous une atmosphère de gaz protecteur.
